Europäisches Patentamt

European Patent Office

Office européen des brevets

(11) Publication number: **0 471 523 B1**

# EUROPEAN PATENT SPECIFICATION

(45) Date of publication of patent specification: **06.12.95** (51) Int. Cl.⁶: **C04B 35/10**

(21) Application number: **91307362.3**

(22) Date of filing: **09.08.91**

(54) Beta alumina sintered body and method of manufacturing the same.

(30) Priority: **13.08.90 JP 211538/90**
**15.03.91 JP 74373/90**
**18.07.91 JP 202137/91**

(43) Date of publication of application:
**19.02.92 Bulletin 92/08**

(45) Publication of the grant of the patent:
**06.12.95 Bulletin 95/49**

(84) Designated Contracting States:
**DE FR GB IT SE**

(56) References cited:
**US-A- 3 895 963**

**CHEMICAL ABSTRACTS, vol. 108, no. 2, January 1988, Columbus, Ohio, US; abstractno. 10287m, Y.YIN ET AL. 'Effect of the second-phase additives tantalum(V)oxide...' page 264 ;**

(73) Proprietor: **NGK INSULATORS, LTD.**
**2-56, Suda-cho, Mizuho-ku**
**Nagoya City**
**Aichi Pref. (JP)**

(72) Inventor: **Ichikawa, Shuichi**
**302, Cosmo Town, 88-1,**
**Tenjin-Cho**
**Handa City,**
**Aichi Pref. (JP)**
Inventor: **Takahashi, Tomonori**
**151, Aza-Kitabatake,**
**Shinmaiko**
**Chita City,**
**Aichi Pref. (JP)**

(74) Representative: **Paget, Hugh Charles Edward et al**
**MEWBURN ELLIS**
**York House**
**23 Kingsway**
**London WC2B 6HP (GB)**

**Description**

The present invention relates to a sintered body consisting mainly of $\beta''$ alumina used as a solid electrolyte (hereinafter, abbreviated as beta alumina sintered body) and a method of manufacturing the same, and especially relates to a beta alumina sintered body used in a sodium sulfur secondary cell and a method of manufacturing the same.

Since a beta alumina sintered body shows a good sodium ion conductivity, it is used in the sodium sulfur secondary cell as a solid electrolyte for insulating metallic sodium as a cathode active material and molten sulfur as an anode active material. In this sodium sulfur secondary cell, almost all the internal resistance is due to the solid electrolyte. Therefore, in order to reduce output power loss during a cell charge condition and also reduce power loss during a cell discharge condition, it is preferred to minimize relative resistance at a temperature such as 350°C at which the beta alumina sintered body is used. Moreover, since the life of the sodium sulfur secondary cell is dependent upon that of the solid electrolyte, it is preferred that a beta alumina sintered body has high strength.

Generally, in order to make the relative resistance lower, a crystal phase of the sintered body is formed by $\beta''$ alumina which shows a better sodium ion conductivity as compared with $\beta$ alumina. To this end, oxides of metallic ions having two valency or less such as magnesium oxide, lithium oxide and the like are added therein so as to stabilize $\beta''$ alumina phase. See US-A-3 895 963.

However, a relative resistance obtained according to the method mentioned above is 3.0 $\Omega \bullet cm$ at 350°C at best, even if the composition is optimized. Moreover, a lower relative resistance can be obtained by promoting grain growth and by decreasing boundary resistance. However, in this case, strength of the beta alumina sintered body is largely decreased, and thus the beta alumina sintered body cannot be suitably used in practice.

Further, as mentioned above, there is a drawback that the temperature range for most suitably sintering the beta alumina formed body becomes narrow. That is to say, if the sintering temperature is beyond this temperature range, an extraordinary grain growth is generated and thus strength is decreased. Therefore, in this case, relative resistance of the beta alumina sintered body can be decreased, but the beta alumina sintered body is not suitable for real use. Actually, the beta alumina sintered body needs such characteristics as that a bulk density is above 3.20 $g/cm^3$ and a four point bending strength is above 180 MPa. Moreover, it is preferred that the temperature range for most suitably sintering the beta alumina formed body becomes wider, because temperature control during a sintering step becomes easier. This is particular true for a mass production of the beta alumina sintered bodies using a large furnace, because a temperature distribution in the large furnace is large.

In order to eliminate the drawbacks mentioned above, there is disclosed, in Japanese Patent Laid-Open Publication No. 59-141459, a technique in which the influence of calcium oxide is reduced or eliminated by adding zirconia into the beta alumina so as to improve ion conductivity. Moreover, there is disclosed, in Japanese Patent Laid-Open Publication No. 60-251172, a technique that sintering temperature is lowered by adding zirconia. However, the beta alumina obtained according to the method mentioned above has also a relative resistance at 350°C of 3.0 $\Omega \bullet cm$ at best, even if the composition is optimized.

Further, in order to improve the durability of the beta alumina sintered body, there is disclosed, in Japanese Patent Publication No. 52-3411 and in Japanese Patent Publication No. 52-40325, a technique in which tantalum or tantalum oxide is present in the intergranular phase by adding tantalum into the beta alumina sintered body.

However, the beta alumina sintered body obtained according to the method mentioned above have improved durability, but a tantalum component is precipitated in the intergranular phase as a different phase. Therefore, resistance in the intergranular phase is increased and the relative resistance becomes high.

Chemical Abstracts 108:10287m (1988), Y. Yin *et al.* mentions effects of $Ta_2O_5$ and $ZrO_2$ additives on microstructure, phase composition and electrical properties.

An object of the invention is to provide a beta alumina sintered body having a high sodium ion conductivity, a fine particle size and a high strength, and a method of manufacturing such a beta alumina sintered body.

Another object of the invention is to provide a beta alumina sintered body having a high sodium ion conductivity and a wider sintering temperature range and a method of manufacturing such a beta alumina sintered body.

According to the invention, there is provided a beta alumina sintered body as set out in claim 1.

Moreover, according to the invention, there is provided a method of manufacturing a beta alumina sintered body as set out in claim 2.

2

In the invention, the amount of added tantalum oxide is less than 0.5 wt% and no tantalum component is present in the intergranular phase. This is because, if tantalum oxide is added in excess i.e. above 0.5 wt% and a tantalum component is precipitated in the intergranular phase, a high sodium ion conductivity can not be achieved.

The beta alumina sintered body according to the invention may be obtained by mixing raw materials consisting essentially of sodium oxide, magnesium oxide and/or lithium oxide, tantalum oxide and aluminum oxide, at a predetermined mixing ratio to obtain raw material powders; calcining the raw material powders to obtain $\beta''$ alumina powders at a predetermined temperature; and shaping and sintering the $\beta''$ alumina powders. As to an addition timing of tantalum oxide, it is preferred to add it into the raw materials at mixing step or to add it into the $\beta''$ alumina powders obtained by calcining raw material powders consisting of sodium oxide, magnesium oxide and/or lithium oxide, and aluminum oxide. As to sodium oxide, magnesium oxide and/or lithium oxide, and aluminum oxide, it should be noted that use may be made of the other raw materials such as carbonate, nitrate, sulfate and chloride which are changed into oxides at the sintering step. Moreover, as to the sintering temperature, it is preferred to select a temperature condition such that a density becomes dense, particle size is maintained even and fine, and flexural strength is not decreased. When an amount of tantalum oxide is increased, a most suitable sintering temperature is decreased accordingly as shown in Table 1. A crystal phase of the sintered body consists mainly of $\beta''$ alumina, and includes a little amount of $\beta$ alumina and sodium aluminate according to circumstances.

The reason for limiting chemical composition is as follows. If the amount of sodium oxide is less than 8 wt%, a crystallization is not completely achieved. Contrary to this, if it is more than 10 wt%, excessive sodium aluminate remains in the crystal phase, and thus relative resistance becomes high. Moreover, if the amount of magnesium oxide is less than 3 wt%, generation of $\beta$ alumina phase having a high resistance is increased, and thus relative resistance becomes high. Contrary to this, if MgO is more than 5.5 wt%, a spinel phase is generated in the crystal phase, and thus density is not high and relative resistance becomes high. Moreover, if the amount of lithium oxide is less than 0.1 wt%, generation of $\beta$ alumina phase having a high resistance is increased, and thus a relative resistance becomes high. Contrary to this, if $Li_2O$ is more than 2.0 wt%, grain growth becomes easier and thus flexural strength is decreased. Further, if the amount of tantalum oxide is more than 0.5 wt%, all the tantalum component is not dissolved in the beta alumina phase and the excessive tantalum component is precipitated in the intergranular phase as a different phase. To promote this solution reaction, it is preferred that the particle size of raw material of tantalum oxide is smaller, especially less than 10 $\mu$m.

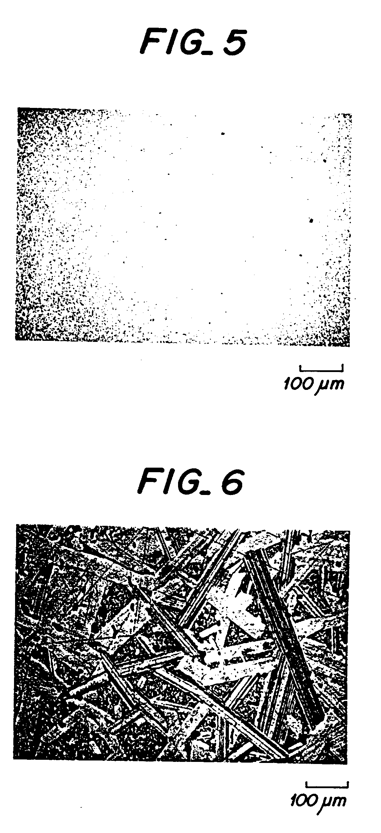

For example, a microscopic photograph of the beta alumina sintered body within the scope of the invention is shown as Fig. 5, and a microscopic photograph of the beta alumina sintered body outside the scope of the invention, in which grain growth is detected, is shown as Fig. 6. As shown in Fig. 6, the strength is decreased when grain growth is detected.

By adding predetermined amounts of magnesium oxide and/or lithium oxide, and tantalum oxide according to the invention, it is possible to obtain a beta alumina sintered body having a high sodium ion conductivity, a fine particle size and a high strength.

When further adding 0.1~2.0 wt% of zirconium oxide, since predetermined amounts of tantalum oxide and zirconium oxide are included in a beta alumina sintered body functioning as a solid electrolyte, it is possible to obtain a beta alumina sintered body having a higher sodium ion conductivity and a wider sintering temperature range.

Moreover, as to an addition timing of zirconium oxide, it is preferred to add it into the raw materials at mixing step or to add it into the $\beta''$ alumina powders obtained by calcining raw material powders of the other components. The reason for limiting the additional amount of zirconium oxide as 0.1~2 wt% is as follows. If the amount of zirconium oxide is more than 2.0 wt%, excessive zirconium component is precipitated in the intergranular phase, and relative resistance is increased due to the thus precipitated zirconium component. Contrary to this, if the amount of zirconium oxide is less than 0.1 wt%, an effect of widening the range of sintering temperature is not sufficiently achieved.

For a better understanding of the invention, reference is taken to the accompanying drawings, in which:

Fig. 1 is a schematic view showing an X-ray diffraction pattern of a beta alumina sintered body indicated as sample No. 6a in Table 1 according to the invention;

Fig. 2 is a schematic view illustrating an X-ray diffraction pattern of a beta alumina sintered body indicated as sample No. 1d in Table 1 according to the relative example;

Fig. 3 is a graph depicting a relation between the added amount of tantalum oxide and (202) peak of tantalum oxide;

Fig. 4 is a graph showing a relation between the added amount of tantalum oxide and relative resistance;

EP 0 471 523 B1

Fig. 5 is a photograph illustrating a microstructure indicated as sample No. 6a in Table 1 according to the invention; and

Fig. 6 is a photograph depicting a microstructure indicated as sample No. 1b in Table 1 as a comparative example.

Hereinafter, actual embodiments will be explained.

Embodiment 1

Alpha alumina powders having a purity of above 99.9%, $Na_2CO_3$ powders, MgO powders, $Li_2O$ powders, $Ta_2O_3$ powders were mixed with each other so as to obtain raw material powders having a composition shown in Table 1. Then, the raw material powders were crushed in a ball mill using ethanol, and the thus crushed raw material powders were calcined at 1200°C for 4 hours so as to synthesize $\beta''$ alumina powder raw materials. Then, the $\beta''$ alumina powder raw materials were further crushed in a ball mill using ethanol to obtain $\beta''$ alumina powders. The thus obtained $\beta''$ alumina powders were granulated and preliminarily shaped using a metal mold so as to obtain a block specimen having a dimension of length: 50 mm, width: 25 mm, thickness: 7 mm. Then, the block specimen was shaped under an isostatic pressure of 245 MPa (2.5 ton/cm²), and the shaped block specimen was sintered at a predetermined temperature for 1 hour in an MgO crucible.

With respect to the block specimen of the beta alumina sintered body obtained in this manner, bulk density was measured by a buoyancy method using butanol. Moreover, a stick-type specimen was cut out from the block specimen, and four point bending strength (flexural strength) and relative resistance at 350°C were measured with respect to the stick-type specimen. The relative resistance was measured by a complex impedance method using four terminals in which use was made of $NaNO_3$-$NaNO_2$ eutectic salts as electrodes. The crystal phase of the sintered body within the scope of the invention consists mainly of $\beta''$ alumina, and a little amount of $\beta$ alumina or sodium aluminate was included according to circumstances. The results of the above measurements were shown in Table 1. Moreover, the results of experiments outside the scope of the invention are also indicated in Table 1 as comparative examples.

4

EP 0 471 523 B1

Table 1(a)

| Sample No. | | Na$_2$O (wt%) | MgO (wt%) | Li$_2$O (wt%) | Ta$_2$O$_5$ (wt%) | A$\ell_2$O$_3$ (wt%) | Sintering temperature (°C) | Relative resistance (350°C, Ω·cm) | Flexural strength (MPa) | Bulk density (g/cc) | Crystal phase |
|---|---|---|---|---|---|---|---|---|---|---|---|
| Present invention | 1 | 9.0 | 5.5 | - | 0.2 | remainder | 1600 | 2.3 | 160 | 3.14 | $\beta''$ |
| | 2 | 10.0 | 4.5 | - | 0.2 | remainder | 1590 | 2.7 | 200 | 3.22 | $\beta''$, NA |
| | 3 | 9.3 | 5.0 | - | 0.2 | remainder | 1590 | 2.4 | 240 | 3.24 | $\beta''$, NA |
| | 4 | 9.7 | 4.2 | - | 0.2 | remainder | 1590 | 2.4 | 240 | 3.24 | $\beta''$, NA |
| | 5 | 8.7 | 4.4 | - | 0.2 | remainder | 1600 | 2.3 | 200 | 3.21 | $\beta''$ |
| | 6a | 9.3 | 3.7 | - | 0.2 | remainder | 1590 | 2.5 | 250 | 3.24 | $\beta''$, NA |
| | 6b | 9.3 | 3.7 | - | 0.5 | remainder | 1570 | 2.5 | 240 | 3.25 | $\beta''$, NA |
| | 6c | 9.3 | 3.7 | - | 0.05 | remainder | 1600 | 2.5 | 250 | 3.24 | $\beta''$, NA |
| | 7 | 8.5 | 4.3 | - | 0.2 | remainder | 1620 | 2.2 | 170 | 3.17 | $\beta''$ |
| | 8 | 8.0 | 3.5 | - | 0.2 | remainder | 1620 | 2.8 | 180 | 3.16 | $\beta''$, $\beta$ |
| | 9 | 9.0 | 3.2 | - | 0.2 | remainder | 1590 | 2.8 | 240 | 3.24 | $\beta''$, $\beta$, NA |
| | 10 | 9.0 | - | 0.5 | 0.1 | remainder | 1580 | 2.5 | 220 | 3.23 | $\beta''$ |
| | 11 | 8.7 | - | 1.5 | 0.2 | remainder | 1550 | 2.5 | 210 | 3.24 | $\beta''$ |
| | 12 | 9.2 | 3.2 | 0.5 | 0.05 | remainder | 1580 | 2.6 | 230 | 3.23 | $\beta''$, $\beta$ |

Table 1(b)

| Sample No. | $Na_2O$ (wt%) | MgO (wt%) | $Li_2O$ (wt%) | $Ta_2O_5$ (wt%) | $Al_2O_3$ (wt%) | Sintering temperature (°C) | Relative resistance (350°C, $\Omega\cdot cm$) | Flexural strength (MPa) | Bulk density (g/cc) | Crystal phase |
|---|---|---|---|---|---|---|---|---|---|---|
| 1a | 9.3 | 3.7 | – | 0 | remainder | 1600 | 3.2 | 240 | 3.24 | $\beta''$, NA |
| 1b | 9.3 | 3.7 | – | 0 | remainder | 1650 | 2.6 | 90 | 3.22 | $\beta''$ |
| 1c | 9.3 | 3.7 | – | 1.0 | remainder | 1550 | 3.0 | 210 | 3.25 | $\beta''$, NA, NT |
| 1d | 9.3 | 3.7 | – | 2.0 | remainder | 1530 | 3.2 | 200 | 3.27 | $\beta''$, NT |
| 2 | 8.2 | 5.7 | – | 0.2 | remainder | 1620 | 5.0 | 100 | 2.87 | $\beta''$, $\beta$, Spi |
| 3 | 9.5 | 6.0 | – | 0.2 | remainder | 1640 | 4.6 | 110 | 3.10 | $\beta''$, NA, Spi |
| 4 | 10.5 | 4.0 | – | 0.2 | remainder | 1590 | 3.3 | 220 | 3.22 | $\beta''$, NA |
| 5 | 10.2 | 2.7 | – | 0.2 | remainder | 1590 | 3.5 | 240 | 3.23 | $\beta''$, $\beta$, NA |
| 6 | 9.0 | 2.5 | – | 0.2 | remainder | 1590 | 3.3 | 240 | 3.24 | $\beta''$, $\beta$ |
| 7 | 7.5 | 4.5 | – | 0.2 | remainder | 1650 | ← not completely sintered → | 240 | ← not completely sintered → | $\beta''$, $\beta$, Spi |
| 8 | 9.0 | – | 0.5 | 0 | remainder | 1590 | 3.2 | 240 | 3.23 | $\beta''$ |
| 9 | 9.0 | – | 0.05 | 0.1 | remainder | 1600 | 3.5 | 230 | 3.23 | $\beta''$, $\beta$ |
| 10 | 9.0 | – | 2.5 | 0.2 | remainder | 1580 | 3.0 | 90 | 3.19 | $\beta''$ |
| 11 | 8.7 | – | 0.5 | 1.0 | remainder | 1550 | 3.2 | 180 | 3.22 | $\beta''$, $\beta$, NT |
| 12 | 9.2 | 3.0 | 0.5 | 2.0 | remainder | 1580 | 3.6 | 170 | 3.21 | $\beta''$, $\beta$, NT |

Comparative examples

Note) $\beta''$: $\beta''-Al_2O_3$,　$\beta$: $\beta-Al_2O_3$,　NA: $NaAlO_2$,　Spi: $MgAl_2O_4$,　NT: $NaTaO_3$

As can be understood from Table 1, all the specimens according to the invention have such characteristics that a relative resistance at 350°C is below 3 $\Omega\cdot cm$ and four point bending strength is above 150 MPa. Especially, the specimens including 8.7~9.7 wt% of sodium oxide, 3.5~5.0 wt% of magnesium oxide and/or 0.5~1.5 wt% of lithium oxide, 0.01~0.5 wt% of tantalum oxide, and a remainder of aluminum oxide show extraordinarily high sodium ion conductivity and flexural strength such that a relative resistance is below 2.5 Ω•cm and four point bending strength is above 200 MPa. As shown in the comparative examples, if a chemical composition of the specimen is outside the scope of the invention, relative resistance becomes high, and flexural strength becomes low. Moreover, in the specimens including more than 0.5 wt% of tantalum oxide which is outside the scope of the invention, a different phase including tantalum components is generated in the crystal phase. If an additional amount of $Ta_2O_5$ is more than 0.5 wt%, it is detected by means of an EPMA apparatus that an excess tantalum element which is not dissolved in the beta alumina phase is present in the intergranular phase, and a different phase is formed by a compound including the excess tantalum element present in the intergranular phase. Further, it is detected that the compound is composed of a crystal phase of sodium tantalate.

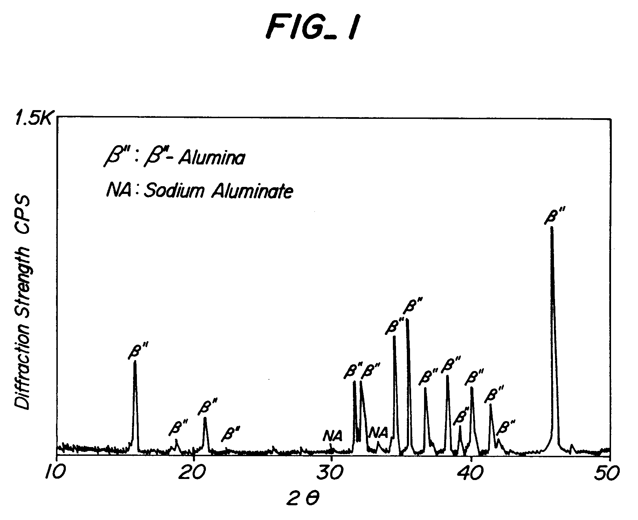

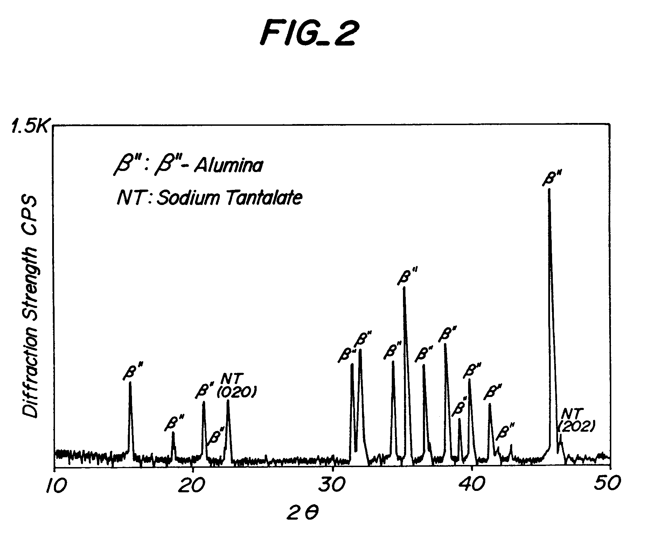

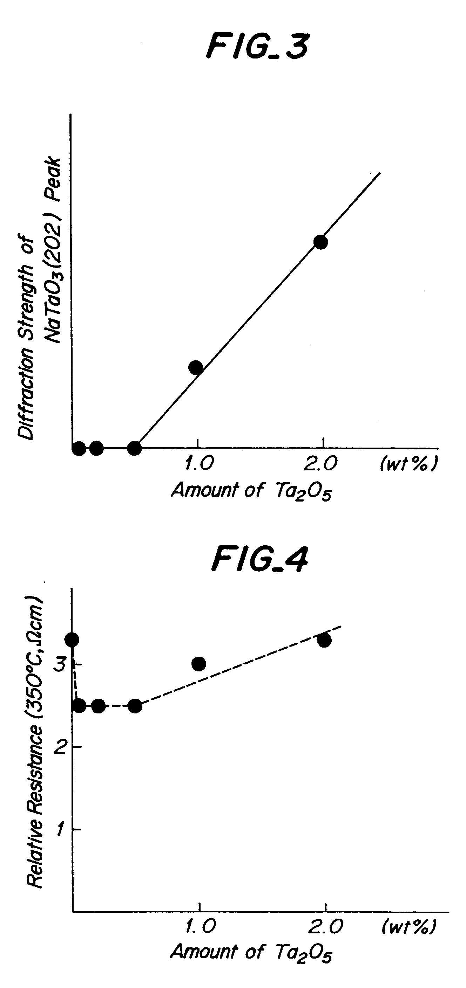

Fig. 1 is a schematic view showing an X-ray diffraction pattern of the beta alumina sintered body indicated as sample No. 6a in Table 1 according to the invention, and Fig. 2 is a schematic view illustrating an X-ray diffraction pattern of the beta alumina sintered body indicated as sample No. 1d in Table 1 of the comparative examples, in which sodium tantalate is generated. Sample Nos. 6a, 6b, 6c according to the invention and sample Nos. 1a, 1c, 1d of the comparative examples are cases in which an additional amount of tantalum oxide is varied while an amount of $Na_2O$ and an amount of MgO are constant. Fig. 3 is a graph showing a relation between the added amount of tantalum oxide and peak strength of (202) peak of sodium tantalate on the X-ray diffraction patterns measured at the same condition. Moreover, a relation between the amount of $Ta_2O_5$ and relative resistance is shown in Fig. 4. The relative resistance is constant till the amount of $Ta_2O_5$ is 0.5 wt%, and sodium ion conductivity is improved by about 35% as compared with the sintered body to which no tantalum oxide is added. If the amount of $Ta_2O_5$ is more than 0.5 wt%, the relative resistance is increased. It seems that this is because sodium tantalate is precipitated in the intergranular phase.

Moreover, Fig. 5 shows a microscopic photograph of sample No. 6a according to the invention, and Fig. 6 shows a microscopic photograph of sample No. 1b of the comparative examples. The sample No. 1b has the same chemical composition as the sample No. 1a, and the sintering temperature is increased as compared with the sample No. 1a so as to promote grain growth. In this manner, by growing particle size, sodium ion conductivity is improved by about 20%, but the strength is decreased by about 60%.

Embodiment 2

Alpha alumina powders having a purity of above 99.9%, $Na_2CO_3$ powders, MgO powders, $Li_2O$ powders, $Ta_2O_5$ powders and $ZrO_2$ powders were mixed with each other so as to obtain raw material powders having chemical compositions shown in Table 2. It should be noted that $Ta_2O_5$ and $ZrO_2$ are not included in the alpha alumina powders. The thus obtained raw material powders were further crushed in a ball mill using ethanol. The thus crushed raw material powders were granulated and preliminarily shaped by using a metal mold so as to obtain a block specimen having a dimension of length: 50 mm, width: 25 mm, thickness: 7 mm. Then, the block specimen was shaped under an isostatic pressure of 245 MPa (2.5 ton/cm²), and the formed block specimen was sintered at a predetermined temperature for 1 hour in MgO crucible. In this case, a sintering temperature was varied near 1600°C by every 10°C so as to obtain sintered bodies which were sintered at various sintering temperatures.

With respect to the block specimens of beta alumina sintered bodies obtained in this manner, bulk density was measured by a buoyancy method using butanol. Moreover, a stick-type specimen was cut out from the block specimen, and four point bending strength (flexural strength) was measured with respect to the stick-type specimen. Further, the range of sintering temperatures, which can obtain the characteristics such that a bulk density is above 3.2 g/cm³ and a flexural strength is above 180MPa, was measured. Furthermore, relative resistances of the stick-type specimens obtained by sintering the formed body at the thus measured range of sintering temperatures were also measured. The relative resistance was measured by a complex impedance method using four terminals in which use is made of $NaNO_3$-$NaNO_2$ eutectic salts as electrodes. The results of the above measurements are shown in Table 2. Moreover, the results of experiments outside the scope of the invention were also indicated in Table 2 as comparative examples.

Table 2(a)

| Sample No. | | Na$_2$O (wt%) | MgO (wt%) | Li$_2$O (wt%) | Ta$_2$O$_5$ (wt%) | ZrO$_2$ (wt%) | A$\ell_2$O$_3$ (wt%) | Range of most suitable sintering temperatures *(°C) | Variation of relative resistance in the sintering temperature range (Ω·cm) | Crystal phase |
|---|---|---|---|---|---|---|---|---|---|---|
| | 21 | 9.0 | 4.0 | - | 0.02 | 0.5 | remainder | 80 | 2.1-2.5 | $\beta$", NA, ZR |
| | 22 | 9.0 | 4.0 | - | 0.05 | 0.5 | remainder | 100 | 2.0-2.3 | $\beta$", NA, ZR |
| | 23 | 9.0 | 4.0 | - | 0.1 | 0.5 | remainder | 100 | 2.0-2.3 | $\beta$", NA, ZR |
| | 24 | 9.0 | 4.0 | - | 0.3 | 0.5 | remainder | 80 | 2.2-2.6 | $\beta$", NA, ZR |
| | 25 | 9.0 | 4.0 | - | 0.5 | 0.5 | remainder | 80 | 2.4-2.8 | $\beta$", NA, ZR |
| | 26 | 9.0 | 4.0 | - | 0.1 | 0.1 | remainder | 80 | 2.0-2.3 | $\beta$", NA, ZR |
| | 27 | 9.0 | 4.0 | - | 0.1 | 1.0 | remainder | 100 | 2.0-2.3 | $\beta$", NA, ZR |
| | 28 | 9.0 | 4.0 | - | 0.1 | 2.0 | remainder | 90 | 2.5-2.9 | $\beta$", NA, ZR |
| Present invention | 29 | 8.0 | 3.0 | - | 0.1 | 0.5 | remainder | 100 | 2.1-2.3 | $\beta$", $\beta$, ZR |
| | 30 | 8.0 | 3.0 | - | 0.5 | 0.5 | remainder | 90 | 2.5-2.8 | $\beta$", $\beta$, ZR |
| | 31 | 8.0 | 3.0 | - | 0.1 | 1.0 | remainder | 110 | 2.0-2.3 | $\beta$", $\beta$, ZR |
| | 32 | 9.5 | 3.5 | - | 0.05 | 0.5 | remainder | 100 | 2.1-2.3 | $\beta$",$\beta$,NA,ZR |
| | 33 | 9.5 | 3.5 | - | 0.1 | 1.0 | remainder | 110 | 2.1-2.3 | $\beta$",$\beta$,NA,ZR |
| | 34 | 9.0 | - | 0.5 | 0.05 | 0.5 | remainder | 100 | 2.0-2.3 | $\beta$", $\beta$, ZR |
| | 35 | 9.0 | - | 1.5 | 0.2 | 0.5 | remainder | 90 | 2.3-2.6 | $\beta$", $\beta$, ZR |
| | 36 | 8.7 | 3.0 | 0.5 | 0.05 | 0.5 | remainder | 100 | 2.0-2.3 | $\beta$", $\beta$, ZR |
| | 37 | 8.7 | 3.0 | 1.5 | 0.1 | 2.0 | remainder | 80 | 2.5-2.7 | $\beta$", $\beta$, ZR |

EP 0 471 523 B1

### Table 2(b)

| Sample No. | Na$_2$O (wt%) | MgO (wt%) | Li$_2$O (wt%) | Ta$_2$O$_5$ (wt%) | ZrO$_2$ (wt%) | Al$_2$O$_3$ (wt%) | Range of most suitable sintering temperatures *(°C) | Variation of relative resistance in the sintering temperature range (Ω·cm) | Crystal phase |
|---|---|---|---|---|---|---|---|---|---|
| 21 | 9.0 | 4.0 | – | 0 | 0 | remainder | 30 | 3.1–3.6 | $\beta''$, NA |
| 22 | 9.0 | 4.0 | – | 0 | 0.5 | remainder | 60 | 3.0–3.4 | $\beta''$, NA, ZR |
| 23 | 9.0 | 4.0 | – | 0.1 | 0 | remainder | 40 | 2.2–2.6 | $\beta''$, NA |
| 24 | 9.0 | 4.0 | – | 0.1 | 0.05 | remainder | 30 | 2.3–2.7 | $\beta''$, NA, ZR |
| 25 | 9.0 | 4.0 | – | 1.0 | 0.5 | remainder | 50 | 3.3–3.8 | $\beta''$, NA, ZR, NT |
| 26 | 9.0 | 4.0 | – | 0.1 | 3.0 | remainder | 60 | 3.2–3.6 | $\beta''$, NA, ZR |
| 27 | 10.5 | 6.0 | – | 0.05 | 0.5 | remainder | 20 | 3.8–3.9 | $\beta''$, NA, Spi, ZR |
| 28 | 8.5 | 2.5 | – | 0.1 | 2.0 | remainder | 40 | 3.4–3.7 | $\beta''$, $\beta$, NA, ZR |
| 29 | 8.0 | 3.0 | – | 2.0 | 1.0 | remainder | 40 | 3.4–3.8 | $\beta''$, $\beta$, ZR, NT |
| 30 (Comparative Examples) | 9.0 | – | 0.5 | 0 | 0 | remainder | 30 | 3.2–3.5 | $\beta''$ |
| 31 (Comparative Examples) | 9.0 | – | 2.5 | 0.1 | 1.0 | remainder | 30 | 3.0–3.3 | $\beta''$, ZR |
| 32 (Comparative Examples) | 9.0 | – | 0.5 | 1.0 | 1.0 | remainder | 40 | 3.4–3.7 | $\beta''$, ZR, NT |
| 33 (Comparative Examples) | 8.7 | 3.0 | 0.5 | 1.0 | 0.5 | remainder | 20 | 3.3–3.6 | $\beta''$, ZR, NT |

Note) $\beta''$: $\beta''$-Al$_2$O$_3$, $\beta$: $\beta$-Al$_2$O$_3$, NA: NaAlO$_2$, Spi: MgAl$_2$O$_4$, ZR: ZrO$_2$, NT: NaTaO$_3$

* Range of most suitable sintering temperatures: range of sintering temperatures such that bulk density is above 3.20 g/cm$^3$ and flexural strength is above 180 MPa

As shown in Table 2, all the specimens according to the invention have a range of sintering temperatures of 80°C or above which can achieve the characteristics such that bulk density is above 3.2 g/cm$^3$ and flexural strength is above 180 MPa, and also have relative resistance of below 2.9 Ω·cm. Especially, the specimens including predetermined amounts of Na$_2$O, MgO and/or Li$_2$O within the scope of the invention, 0.05-0.1 wt% of tantalum oxide and 0.5-1.0 wt% of zirconium oxide have a range of sintering temperatures of above 100°C and a relative resistance of below 2.3 Ω·cm, and thus show a wide range of sintering temperatures and an extraordinarily low relative resistance. Moreover, if a chemical composition is varied by varying an amount of $Na_2O$ or $MgO$ and/or $Li_2O$ within the scope of the invention, the same effects as mentioned above can be obtained. As shown in the comparative examples, if the chemical composition is outside the scope of the invention, the range of sintering temperatures becomes narrow or relative resistance becomes high.

Moreover, in the specimen to which only $ZrO_2$ is added, a range of sintering temperatures is extended only by $30°C$ as compared with the specimen to which no $ZrO_2$ is added. Further, in the specimen to which only $Ta_2O_5$ is added, a relative resistance becomes less than 2.6 $\Omega \cdot cm$, but a range of sintering temperatures is extended only by $10°C$.

As mentioned above in detail, according to the invention, since predetermined amounts of tantalum oxide and zirconium oxide and magnesium oxide and/or lithium oxide are added in the beta alumina sintered body and no tantalum component is existent in an intergranular phase, a range of sintering temperatures of the beta alumina sintered body according to the invention is extended by more than $50°C$ as compared with the beta alumina sintered body to which no tantalum oxide and zirconium oxide are added, and a sodium ion conductivity is improved by about 35%.

## Claims

1. A beta alumina sintered body which is at least mainly $\beta''$ alumina and consists essentially of 8.0 - 10.0 wt% of sodium oxide, 3.0 - 5.5 wt% of magnesium oxide and/or 0.1 - 2.0 wt% of lithium oxide, 0.01 - 0.5 wt% of tantalum oxide, optionally 0.1 - 2.0 wt% of zirconium oxide, and the remainder aluminum oxide, wherein no tantalum component is present in an intergranular phase.

2. A method of manufacturing a beta alumina sintered body comprising the steps of mixing raw materials consisting essentially of 8.0 - 10.0 wt% of sodium oxide, 3.0 - 5.5 wt% of magnesium oxide and/or 0.1 - 2.0 wt% of lithium oxide, 0.01 - 0.5 wt% of tantalum oxide, optionally 0.1 - 2.0 wt% of zirconium oxide and the remainder aluminum oxide, or raw materials producing the same oxides in the same amounts on sintering, to obtain raw material powder; shaping the raw material powder to obtain a shaped body; and sintering the shaped body to obtain a beta alumina sintered body which is at least mainly $\beta''$ alumina and wherein no tantalum component is present in an intergranular phase.

## Patentansprüche

1. $\beta$-Aluminiumoxid-Sinterkörper, der zumindest hauptsächlich aus $\beta''$-Aluminiumoxid und im wesentlichen aus 8,0 - 10,0 Gew.-% Natriumoxid, 3,0 - 5,5 Gew.-% Magnesiumoxid und/oder 0,1 - 2,0 Gew.-% Lithiumoxid, 0,01 - 0,5 Gew.-% Tantaloxid, gegebenenfalls 0,1 - 2,0 Gew.-% Zirkonoxid, und Aluminiumoxid als Rest besteht, worin in einer intergranularen Phase keine Tantal-Komponente vorliegt.

2. Verfahren zur Herstellung eines $\beta$-Aluminiumoxid-Sinterkörpers, umfassend die Schritte: Vermischen von Rohmaterialien, die im wesentlichen aus 8,0 - 10,0 Gew.-% Natriumoxid, 3,0 - 5,5 Gew.-% Magnesiumoxid und/oder 0,1 - 2,0 Gew.-% Lithiumoxid, 0,01 - 0,5 Gew.-% Tantaloxid, gegebenenfalls 0,1 - 2,0 Gew.-% Zirkonoxid, und Aluminiumoxid als Rest bestehen, oder von Rohmaterialien, die beim Sintern dieselben Oxide in denselben Mengen ergeben, um Rohmaterialpulver zu erhalten; Formen des Rohmaterialpulvers zu einem Formkörper; und Sintern des Formkörpers, um einen $\beta$-Aluminiumoxid-Sinterkörper zu erhalten, der zumindest hauptsächlich aus $\beta''$-Aluminiumoxid besteht und worin in einer intergranularen Phase keine Tantal-Komponente vorliegt.

## Revendications

1. Corps fritté en alumine bêta qui est au moins essentiellement de l'alumine $\beta''$ et consiste essentiellement en 8,0-10,0% en poids d'oxyde de sodium, 3,0-5,5% en poids d'oxyde de magnésium et/ou 0,1-2,0% en poids d'oxyde de lithium, 0,01-0,5% en poids d'oxyde de tantale, éventuellement 0,1-2,0% en poids d'oxyde de zirconium, et le restant en oxyde d'aluminium, dans lequel aucun composant de tantale n'est présent dans une phase inter-granulaire.

2. Méthode de fabrication d'un corps fritté en alumine bêta comprenant les étapes de mélange de matières premières consistant essentiellement en 8,0-10,0% en poids d'oxyde de sodium, 3,0-5,5% en poids d'oxyde de magnésium et/ou 0,1-2,0% en poids d'oxyde de lithium, 0,01-0,5% en poids d'oxyde de tantale, éventuellement 0,1-2,0% en poids d'oxyde de zirconium et le restant en oxyde d'aluminium, ou des matières premières produisant les mêmes oxydes dans les mêmes quantités lors du frittage, pour obtenir une poudre de matière première ; de mise en forme de la poudre de matière première pour obtenir un corps formé ; et de frittage du corps mis en forme pour obtenir un corps fritté en alumine bêta qui est au moins essentiellement de l'alumine $\beta''$ et dans lequel aucun composant de tantale n'est présent dans une phase inter-granulaire.

# FIG_1

# FIG_2

## FIG_3

## FIG_4

## FIG_ 5

100 μm

## FIG_ 6

100 μm